# EUROPEAN PATENT SPECIFICATION

(11) **EP 2 864 003 B1**
(45) Date of publication and mention of the grant of the patent: **31.05.2017**
(21) Application number: 13807414.1
(22) Date of filing: 19.06.2013
(51) Int. Cl.: A62D 3/00, B32B 27/08, B32B 27/34, C08K 5/14, C08K 5/17, C08K 5/3492, C09J 11/02, C09J 11/06, C09J 171/03, B32B 27/28, C08K 3/00, C08L 71/03

(54) **ADHESION PROMOTING CURATIVE AND STABILIZER SYSTEM FOR ELASTOMER COMPOSITION**
ADHÄSIONSFÖRDERNDES HEIL- UND STABILISATORSYSTEM FÜR ELASTOMERZUSAMMENSETZUNG
SYSTÈME D'AGENT VULCANISANT ET DE STABILISANT, AMÉLIORANT L'ADHÉRENCE, POUR UNE COMPOSITION D'ÉLASTOMÈRE

(30) Priority: 22.06.2012 US 201213530909
(43) Date of publication of application: 29.04.2015
(73) Proprietor: ZEON CHEMICALS L.P., Louisville, KY 40211 (US)
(72) Inventor: SMITH, Charles T., McKinney, TX 75071 (US); BURCZAK, Ivan, Barry Vale Of Glamorgan CF62 3BF (GB)
(74) Representative: Hart-Davis, Jason
(86) International application number: PCT/US2013/046508
(87) International publication number: WO 2013/192283

(56) References cited:
- WO-A1-99/32542
- US-A- 5 844 047
- US-A- 6 020 440
- US-A1- 2008 160 318
- US-B1- 6 270 901

## Description

### BACKGROUND OF THE INVENTION

The invention relates to an adhesion promoting curative and stabilizer system for an elastomer composition, a vulcanizable elastomer composition comprising the adhesion promoting curative and stabilizer system, as well as articles made of the vulcanizable elastomer composition. The invention also relates to a method of improving adhesion of an elastomer composition to another polymer by using this adhesion promoting curative and stabilizer system. The invention relates in particular to bonding an elastomer composition to a polymer which is not readily bondable with such elastomer. The invention further relates to a curative system for an elastomer composition which helps to prevent deterioration in strength and elasticity of the elastomer composition upon heat aging.

There are many composite articles in which a portion made of an elastomer is bonded to a portion made of another polymer, in particular layered articles in which a layer of elastomer is bonded to a layer of another polymer. The layered composite article has a desired combination of properties derived from the respective advantageous properties of each layer. Examples of layered composite articles are hoses, cables, cable covers, rolls, rollers, etc. Examples of non layered composite articles are grommets, plugs and packers.

A particular challenge in the manufacture of such composite articles is to secure a strong and lasting bond between a portion made of an elastomer and a portion made of another polymer. It is particularly difficult to provide a strong and lasting bond between an elastomer and another polymer that is dissimilar in properties to the elastomer. On the other hand, such a combination of materials having dissimilar properties is often sought because of the benefits of the combined properties of the dissimilar materials.

An example of a useful combination of elastomer and another polymer requires bonding an elastomer to a fluorine containing polymer (or fluoropolymer). Fluoropolymers, which may be elastomers or may be thermoplastic, have useful properties including resistance to chemicals, high thermal stability, and non-stick surfaces. For applications which require a fluoropolymer to be bonded to an elastomer, the non-stick properties of the elastomer make such bonding difficult. Since fluoroelastomers are expensive, most applications use the fluoroelastomer to form the surface which comes into contact with chemicals, such as the inner layer of a fuel hose, and use another elastomer to complete the construction of an article. This other elastomer may also have advantageous properties not possessed by the fluoropolymer.

U.S. patent No. 6,340,511 discloses a fuel hose in which an inner layer formed of a fluororubber (FKM) is adhered by vulcanization to an outer layer formed of a blend of an acrylonitrile-butadiene rubber (NBR) and polyvinyl chloride (PVC.) An improved adhesion by vulcanization is obtained by (1) limiting the average polymerization degree of the PVC to a range from 700 to 1,750, (2) incorporating a carboxylic acid 1,8-diazabicyclo-(5,4,0)-undecene-7 salt (or carboxylic DBU salt) in the NBR.PVC blend, and (3) incorporating a polyol vulcanizing agent in the FKM. This U.S. patent discloses that adhesion is further enhanced by incorporating in the NBR.PVC blend at least one material selected from a metal oxide, a silica-type filler and an epoxy resin, with the combined use of a metal oxide and an epoxy resin being preferred.

In many of the uses for articles made from materials containing elastomers, the articles must sustain prolonged exposure to heat without deterioration of their mechanical and chemical properties. The retention of strength and elastic properties upon aging under conditions of extreme temperatures is particularly critical for parts used in an automobile. The adhesion promoting curative and stabilizer system disclosed herein achieves this retention of strength and elastic properties while also improving the adhesion between the elastomer composition and another polymer.

### SUMMARY OF THE INVENTION

The present invention relates to a vulcanizable elastomer composition having improved adhesion to other polymers and comprises at least one elastomer and an adhesion promoting curative and stabilizer system, wherein
1. the at least one elastomer is an epichlorohydrin copolymer,
2. the adhesion promoting curative and stabilizing system comprises
   a) an organic peroxide;
   b) a diazabicycloamine;
   c) an isocyanurate;
   d) a layered organically modified inorganic nanofiller; and
   e) optionally an antioxidant, and
3. the total antioxidant content in the elastomer composition is in the range from zero up to and including 5 weight parts, for 100 weight parts of elastomer.

Yet another aspect of the invention is an article made from a vulcanizable elastomer composition which comprises the adhesion promoting curative and stabilizer system described above.

Another aspect of the invention is a method of improving adhesion of an elastomer composition to another polymer by using the vulcanizable elastomer composition as defined above.

### DESCRIPTION OF THE INVENTION

### Organic peroxide curative

The adhesion promoting curative and stabilizer system is a peroxide curing system in which the main curing agent is an organic peroxide. The organic peroxides may be one or more of the peroxide curatives known in the art, which include, but are not limited to, diaryl peroxides, ketone peroxides, peroxydicarbonates, peroxyesters, dialkyl peroxides, hydroperoxides, benzoyl peroxides, lauroyl peroxides. Examples of the organic peroxide curative are di-t-butyl peroxide, dicumyl peroxide, t-butylcumyl peroxide, t-butyl peroctoate, p-di(t-butylperoxy)-diisopropylbenzene 1,1-di-(t-butylperoxy)-3,3,5-trimethylcyclohexane, 2,5-dimethyl-2,5-di-(t-butylperoxy) 3-hexyne, t-butyl-peroxy-(cis-3-carboxy)propenoate, 1,1-di(t-amylperoxy)-cyclohexane, t-amyl-(2-ethylhexyl)peroxycarbonate, t-butylperoxy-3,5,5-trimethylhexanoate,.alpha.-.alpha.'-bis(t-butylperoxy) diisopropyl benzene, 2,5-dimethyl-2,5-di(t-butylperoxy)hexane, 1,1-di(t-butylperoxy)-3,3,5-trimethylcyclohexane, 2,5-dimethyl-2,5-di(t-butylperoxy)hexene-3, 2,5-dimethyl-2 ,5-di-t-butylperoxyhexane, and t-butyl perbenzoate, or mixtures thereof.

### Diazabicycloamine

A diazabicycloamine (which may also be a salt or other derivative thereof) is used as a vulcanization accelerator in the curative and stabilizer composition. Examples of the diazobicycloamine include, but are not limited to, 1,8-diazabicyclo[5.4.0]-7-undecene (also known as DBU), 1,5-diazabicyclo[4.3.0]-5-nonene (also known as DBN), 1,4-diazabicyclo[2.2.2]-octane (also known as DABCO), and mixtures thereof. A variety of diazabicycloamine vulcanization accelerators is available commercially, for example POLYCAT SA-1 which is a phenol salt of DBU available from Air Products and Chemicals, Inc.

### Isocyanurate

An isocyanurate is used as a co-agent in the curative and stabilizer composition. The isocyanurate may be used in pure form or associated with a solid carrier which may be in particulate form. The isocyanurate associated with a solid particulate carrier may be in the form of a wetted dispersion or in the form of a powder. Examples of the isocyanurate co-agent include, but are not limited to, triallyl isocyanurate, triglycidyl isocyanurate, and mixtures thereof. The isocyanurate co-agent is available commercially, for example TAIC DLC-A which is a triallyl isocyanurate carried on silicon dioxide and available from Natrochem, Inc.

### Layered organically modified inorganic nanofiller

The nanofiller in the curative and stabilizer composition of the invention is an inorganic filler having a layered morphology comprising layers, also referred to as sheets, plates or platelets, which have at least one dimension in the single digit nanometer range, and are characterized by the dimensions in two directions being much greater than the dimension in the third direction. The layers in the inorganic nanofiller have been surface modified by treatment of the inorganic nanofiller with an organic compound, which may be neutral or ionic, to improve the miscibility and compatibility of the inorganic nanofiller with polymers. The surface modification of the layers in the inorganic nanofiller changes the hydrophobicity of the inorganic nanofiller to different degrees depending on the nature of the modifier compound. Therefore, a suitable surface treated inorganic nanofiller may be selected to have the desired miscibility with the particular elastomer to be used with the curative and stabilizer system, by matching the degree of hydrophobicity of the elastomer. A single nanofiller or a mixture of nanofillers may be used in the curative and stabilizer system described herein.

Particularly suitable as the organically modified inorganic nanofiller are organoclays, which are organically modified inorganic clays. Typical inorganic clays are phyllosilicates, which may be naturally occurring or synthetic. Examples of naturally occurring phyllosilicates are smectite-type clays which include the commonly available montmorillonite clay, in particularly sodium montmorillonite, magnesium montmorillonite, and calcium montmorillonite.

The organic compounds used for modifying the inorganic clays may be neutral polar organic compounds such as amides, esters, lactams, nitriles, ureas, carbonates, phosphates, phosphonates, sulfates, sulfonates, nitro compounds, etc. Ionic organic compounds are commonly used for preparing organoclays from inorganic clays by cationic exchange in which the metal cation in the inorganic clay is replaced with the organic cation. Examples of such ionic organic modifying compounds are cationic surfactants, in particular onium compounds which include ammonium, phosphonium, or sulfonium derivatives of aliphatic, aromatic or arylaliphatic amines, phosphines and sulfides. The cation exchange may be carried out in water, or a combination of water and a water-miscible organic solvent. For example, the sodium ions in sodium montmorillonite may be exchanged for a quaternary organic cation such as a tetrahydrocarbylammonium cation.

Organoclays are available commercially, for example from Southern Clay Products, Inc., which offers a line of "CLOISITE" clays derived from layered magnesium aluminum silicate in which the metal cation has been exchanged with a variety of onium cations at a variety of concentrations. For example, CLOISITE 10A has a higher content of the onium cation "dimethyl, benzyl, hydrogenated tallow quaternary ammonium" than CLOISITE 11B. Similarly, CLOISITE 15A has a higher content of the onium cation "dimethyl, di-hydrogenated tallow quaternary ammonium" than CLOISITE 20A.

### Antioxidant

Elastomer compounding commonly includes the addition of an antioxidant to the elastomer composition. The adhesion promoting curative and stabilizer system of the invention optionally may contain an antioxidant. Examples of antioxidant include, but are not limited to, aryl diamines, in particular diphenyl amine and its derivatives such as 4,4'-diphenylisopropyl diphenylamine, octylated diphenylamine, N-(P-Toluene sulphonyl)-N'-(phenyl)phenylene diamine, the reaction product of diphenylamine and diisobutylene, etc.

### Adhesion promoting curative and stabilizer system

The proportions of the organic peroxide, the diazabicycloamine, the isocyanurate, the layered organically modified inorganic nanofiller and the optional antioxidant in the curative and stabilizer composition may be selected based on traditional rubber compounding techniques.

The curative and stabilizer composition may comprise:
a) 100 parts by weight of the organic peroxide;
b) 15 - 90 parts by weight of the diazabicycloamine;
c) 15 - 170 parts by weight of the isocyanurate;
d) 25 - 300 parts by weight of the layered organically modified inorganic nanofiller; and
e) 0 - 120 parts by weight of the antioxidant.

Another embodiment of the curative and stabilizer composition may comprise:
a) 100 parts by weight of the organic peroxide;
b) 20 - 40 parts by weight of the diazabicycloamine;
c) 30 - 50 parts by weight of the isocyanurate;
d) 50 - 80 parts by weight of the layered organically modified inorganic nanofiller; and
e) 0 - 30 parts by weight of the antioxidant.

Yet another embodiment of the curative and stabilizer composition may comprise:
a) 100 parts by weight of the organic peroxide;
b) 25 - 35 parts by weight of the diazabicycloamine;
c) 35 - 45 parts by weight of the isocyanurate;
d) 60 - 70 parts by weight of the layered organically modified inorganic nanofiller; and
e) 0 - 20 parts by weight of the antioxidant.

### Compounding of curative and stabilizer system

The adhesion promoting curative and stabilizer system of the invention may be prepared by blending or mixing its components by conventional means known to those skilled in the art. For convenience, the adhesion promoting curative and stabilizer system may also be provided in the form of a blend with a polymer binder. An appropriate amount of this polymer bound curative and stabilizer system will be added to an elastomer composition prior to fabrication and vulcanization. In some embodiments, the polymer binder is one known to be particularly compatible for blending with an elastomer to be vulcanized with the curative and stabilizer system. Examples of the polymer binder include, but are not limited to ethylene propylene copolymer, ethylene propylene diene monomer, ethylene vinyl acetate polyacrylate terpolymer..

### Elastomer composition

The adhesion promoting curative and stabilizer system of the invention may be used to prepare a large variety of elastomer compositions. Elastomers suitable for use with the curative and stabilizer system are elastomers that can be crosslinked by peroxide curing and have enough unsaturation for effective curing. The composition may contain a single elastomer or a combination of such elastomers. Those elastomers may be polar or non-polar.

Peroxide cured elastomers include a large number of rubbers such as natural rubber, SBR, polybutadiene, acrylonitrile butadiene (NBR), hydrogenated acrylonitrile butadiene (HNBR), ethylene propylene diene monomer (EPDM), ethylene propylene rubber (EPR), silicone rubber, polyurethane, chlorinated polyethylene, chlorosulfonated polyethylene, fluoroelastomer (FKM), ethylene vinyl acetate (EVA), acrylonitrile butadiene styrene (ABS), acrylic rubber, and polyethylene (PE).

The amount of adhesion promoting curative and stabilizer system used for compounding with the peroxide cured elastomer may be determined by one skilled in the art based on the nature of the elastomer used in the composition. Typically, the amount of curative and stabilizer system added to the elastomer is 3 - 10 weight parts for 100 weight parts of elastomer (or phr). For some embodiments this amount may be 4 - 8 phr. In yet other embodiments the amount of the curative and stabilizer system may be 4 - 6 phr.

The elastomer composition according to the invention may be formulated to include other additives suitably selected by one of ordinary skill in the art, which may include but are not limited to other curing aids, activators, retarders, accelerators, processing additives, plasticizers, antioxidants, antiozonants, fillers, etc. In formulating the elastomer composition one or more antioxidant may be added, and these may be the same as or different from the antioxidant optionally present in the curative and stabilizing system described herein. Since the described curative system also has a stabilizing effect, very little or no antioxidant is required in the elastomer composition. The total antioxidant content in the elastomer composition may be in the range from zero up to and including 5 weight parts, for 100 weight parts of elastomer. Some embodiments may have a total antioxidant content from zero up to and including 3 weight parts, for 100 weight parts of elastomer.

An elastomer composition containing the described adhesion promoting curative and stabilizer system may be prepared by conventional means known in the art. The elastomer composition may be prepared as a single pass mix wherein the elastomer, fillers, plasticizers, process aids and the described adhesion promoting curative and stabilizer system are added in the same process. Alternatively, the elastomer composition may be prepared using multiple pass mixing wherein a masterbatch consisting of the elastomer, fillers, plasticizers and processing aids is mixed. After refining on a mill, the resultant masterbatch is then sent through the mixing process again or through a mill-mixing process and the described adhesion promoting curative and stabilizer system is then added.

A practical and preferred method for supplying the curative and stabilizer system is to disperse its individual components into a rubber matrix in a concentrated form by using conventional internal mixers known in the art. The resultant sheets of concentrate are subsequently added to the elastomer composition in the appropriate ratio to obtain the desired elastomer composition for end use.

### Adhesion to other polymers

When the curative and stabilizer system of the invention is used to compound an elastomer composition which is then vulcanized, the vulcanized elastomer composition has good resistance to heat aging. In addition, when the elastomer composition prepared with the curative and stabilizer system of the invention is formed into a part which is contacted with a surface of another part made of another polymer, good adhesion (also referred to as "vulcanization adhesion") is obtained upon vulcanization of the elastomer composition.

The following examples further illustrate aspects of the invention without limiting the scope of the invention. Unless otherwise indicated, all parts, percentages, ratios, etc., in the examples and in the rest of the specification are in terms of weight.

### EXAMPLE 1

The components in Table 1 are blended in a mixer to prepare the adhesion promoting curative and stabilizer system of Example 1.

**Table 1**

| **Component** | **Amount (phr)** |
|---|---|
| ^{a} LUPEROX F40P-SP2 | 1.50 |
| ^{b} POLYCAT SA-1 | 0.50 |
| ^{c} TAIC DLC-A | 0.50 |
| ^{d} CLOISITE 10A | 1.00 |
| ^{e} VANOX CDPA | 0.75 |

| | |
|---|---|
| ^{a} organic peroxide from Arkema Inc. ^{b} DBU from Air Products and Chemicals, Inc. ^{c} triallyl isocyanurate from Natrochem, Inc. ^{d} montmorillonite modified with dimethyl, benzyl, hydrogenated tallow quaternary ammonium salt from Southern Clay Products, Inc. ^{e} diphenyl amine antioxidant from R.T. Vanderbilt Co. phr: parts per hundred rubber (weight parts per 100 weight parts of elastomer) | |

### EXAMPLE 2

An elastomer composition which does not contain an antioxidant was prepared by two-stage mixing according to the formulation shown in Table 2. A masterbatch was mixed in a 1600cc laboratory internal mixer, then refined (allowed to roll and process) on a laboratory mill. It was then sheeted off and allowed to cool. The masterbatch was then placed back on the mill where the components of the adhesion promoting curative and stabilizer system were added. After further refining on the mill, the obtained elastomer composition was sheeted off.

The properties of this elastomer composition were measured prior to and after heat aging in accordance with the following methods:
ASTM D412 - Standard Test Method for Vulcanized Rubber; and
ASTM D573 - Standard Test Method for Rubber - Deterioration in an Air Oven.

The results are shown in Tables 3 and 4.

**Table 2**

| **Component** | **Amount (phr)** |
|---|---|
| ¹ HYDRIN H1110 | 65.00 |
| ² HYDRIN T3100 | 35.00 |
| ³ Stearic acid | 1.00 |
| ⁴ STRUKTOL TR 121 | 1.00 |
| ⁵ DYNAMAR 5251Q | 5.00 |
| ⁶ N550 | 30.00 |
| ⁷ N220 | 25.00 |
| ⁸ DBEEA | 3.00 |
| ^{a} LUPEROX F40P-SP2 | 1.50 |
| ^{b} POLYCAT SA-1 | 0.50 |
| ^{c} TAIC DLC-A | 0.75 |
| ^{d} CLOISITE 10A | 1.00 |

| | |
|---|---|
| ¹ ECO copolymer from Zeon Chemicals L.P. ² ECO terpolymer from Zeon Chemicals L.P. ³ stearic acid from PMC Group ⁴ dispersant/lubricant from Strucktol Company of America ⁵ Sodium Carbonate from 3M ⁶ carbon black from Cabot Corporation ⁷ carbon black from Cabot Corporation ⁸ plasticizer from HallStar ^{a} organic peroxide from Arkema Inc. ^{b} DBU from Air Products and Chemicals, Inc. ^{c} triallyl isocyanurate from Natrochem, Inc. ^{d} montmorillonite modified with dimethyl, benzyl, hydrogenated tallow quaternary ammonium salt from Southern Clay Products, Inc. | |

**Table 3**

| **Original Vulcanized Properties (Post Cured 2 hrs. @ 150°C)** | | |
|---|---|---|
| Hardness A | (pts.) | 75 |
| Tensile @ break | (MPa) | 17 |
| Elongation @ break | (%) | 246 |

**Table 4**

| **Air Oven Aged Properties (168 hrs. @ 150°C)** | | |
|---|---|---|
| Hardness A | (pts.) | 88 |
| Hardness A | (change, pts.) | 13 |
| Tensile @ break | (MPa) | 15.3 |
| Tensile @ break | (change, %) | -10 |
| Elongation @ break | (%) | 126 |
| Elongation @ break | (change, %) | -49 |

### EXAMPLE 3

An elastomer composition which contains an antioxidant was prepared in the same manner as for Example 2 but according to the formulation shown in Table 5. This elastomer composition was tested in the same manner as for Example 2, with the results shown in Tables 6 and 7.

**Table 5**

| **Component** | **Amount (phr)** |
|---|---|
| HYDRIN H1110 | 65.00 |
| HYDRIN T3100 | 35.00 |
| Stearic acid | 1.00 |
| STRUKTOL TR 121 | 1.00 |
| DYNAMAR 5251Q | 5.00 |
| N550 | 25.00 |
| N220 | 30.00 |
| DBEEA | 3.00 |
| ^{a} LUPEROX F40P-SP2 | 1.75 |
| ^{b} POLYCAT SA-1 | 0.50 |
| ^{c} TAIC DLC-A | 0.75 |
| ^{d} CLOISITE 10A | 1.15 |
| ^{e} VANOX CDPA | 0.20 |

| | |
|---|---|
| ¹ ECO copolymer from Zeon Chemicals L.P ² ECO terpolymer from Zeon Chemicals L.P. ³ stearic acid from PMC Group ⁴ dispersant/lubricant from Strucktol Company of America ⁵ Sodium carbonate from 3M ⁶ carbon black from Cabot Corporation ⁷ carbon black from Cabot Corporation ⁸ plasticizer from HallStar ^{a} organic peroxide from Arkema Inc. ^{b} DBU from Air Products and Chemicals, Inc. ^{c} triallyl isocyanurate from Natrochem, Inc. ^{d} montmorillonite modified with dimethyl, benzyl, hydrogenated tallow quaternary ammonium salt from Southern Clay Products, Inc. ^{e} diphenyl amine antioxidant from R.T. Vanderbilt Co. | |

**Table 6**

| **Original Vulcanized Properties (Post Cured 2 hrs. @ 150°C)** | | |
|---|---|---|
| Hardness A | (pts.) | 75 |
| Tensile @ break | (MPa) | 16.4 |
| Elongation @ break | (%) | 262 |

**Table 7**

| **Air Oven Aged Properties (168 hrs. @ 150°C)** | | |
|---|---|---|
| Hardness A | (pts.) | 87 |
| Hardness A | (change, pts.) | 12 |
| Tensile @ break | (MPa) | 14.4 |
| Tensile @ break | (change, %) | -12 |
| Elongation @ break | (%) | 118 |
| Elongation @ break | (change, %) | -55 |

A comparison of the heat aging data obtained for Example 3 (which contains an antioxidant) with the heat aging data obtained for Example 2 (which contains no antioxidant) suggests that the adhesion promotion curative and stabilizer system of the invention somehow unexpectedly provided thermal stabilization to the elastomer composition. This is evident because there were no significant differences in the tensile and elongation changes observed after heat aging for the elastomer composition which contained an antioxidant, as compared to the elastomer composition which did not contain an antioxidant.

### ADHESION TESTING

The elastomer composition of Example 3 was tested in the following manner for adhesion to different polymers upon vulcanization. Adhesion samples were prepared by warming up the elastomer composition on a laboratory mill and sheeting off at a thickness of about 0.2032 cm. Composites measuring 15.24 cm x 15.24 cm were then assembled with the following successive layers (akin to a sandwich):
1) Fabric reinforcement
2) Elastomer composition of Example 3
3) Polymer tested for adhesion
4) Elastomer composition of Example 3
5) Fabric reinforcement.

A thin sheet of MYLAR film (about 6 cm wide) was placed between the elastomer composition of Example 3 and the polymer tested for adhesion on one side of the assembly. The MYLAR film was positioned from the outer edge down into the assembled pad. This provided a non-sticking tab area to enable testing of adhesion strength. The grips or jaws of the Instron machine used in the step described below were connected to the sample through this tab area.

The assembled pad was placed into a 15.24 cm x 15.24 cm x 0.3175 cm pre-heated steel mold and cured in an electric hydraulic press. After cooling for 24 hours, the pad was cut into 2.54 cm x 20.54 cm strips. A strip was then loaded into an Instron type tensile tester and the adhesion strength determined by measuring the resistance to separation. The results are shown in Table 8.

**Table 8**

| **Polymer** | **Cure** (@ 6.9 MPa) | **Adhesive strength** (N/mm) |
|---|---|---|
| ^{a} Dyneon FE 5730 (Bisphenol) | 60' @ 150°C | 8.2 |
| ^{b} Dyneon FLS 2650 (Peroxide) | 60' @ 150°C | 5.3 |
| ^{c} THV-500 | 60' @ 150°C | 9.5 |
| ^{d} Polyamide 6/6 | 15' @ 170°C | 11.5 |
| ^{e} Polyamide 11 | 60' @ 150°C | 11.1 |

| | | |
|---|---|---|
| ^{a} Fluoroelastomer from 3M ^{b} Fluoroelastomer from 3M ^{c} Fluoroplastic from 3M ^{d} Nylon from BASF ^{e} Nylon from BASF | | |

The data in Table 8 shows that the elastomer composition prepared with the adhesion promoting curative and stabilizer system of the invention bonded very well to fluoroelastomers (FKM). In addition, the elastomer composition unexpectedly exhibited good thermoset elastomer adhesion to polyamides.

The curative and stabilizer system described herein makes possible the preparation of elastomer compositions which have good heat aging properties, even without the use of antioxidants in compounding the elastomer compositions. These elastomer compositions also develop strong adhesion to other polymers upon vulcanization, making possible the fabrication of composite articles in which elastomeric parts are bonded to parts made of other polymers, in particular other polymers which are ordinarily not readily bondable to the elastomer.

Other embodiments of the present invention will be apparent to and can be readily made by those skilled in the art from consideration of the specification and practice of the invention disclosed herein, without departing from the spirit and scope of the invention. It is intended that the specification and examples be considered as illustrative only, with the true scope of the invention being indicated by the following claims.

## Claims

1. A vulcanizable elastomer composition having improved adhesion to other polymers and comprising at least one elastomer and an adhesion promoting curative and stabilizer system,
wherein
1. the at least one elastomer is an epichlorohydrin copolymer,
2. the adhesion promoting curative and stabilizer system comprises
a) an organic peroxide;
b) a diazabicycloamine;
c) an isocyanurate;
d) a layered organically modified inorganic nanofiller; and
e) optionally an antioxidant, and
3. the total antioxidant content in the elastomer composition is in the range from zero up to and including 5 weight parts, for 100 weight parts of elastomer.

2. A composition according to claim 1, wherein the adhesion promoting curative and stabilizer system comprises:
a) 100 parts by weight of the organic peroxide;
b) 15 - 90 parts by weight of the diazabicycloamine;
c) 15 - 170 parts by weight of the isocyanurate;
d) 25 - 300 parts by weight of the layered organically modified inorganic nanofiller; and
e) 0 - 120 parts by weight of the antioxidant.

3. A composition according to claim 1, wherein the adhesion promoting curative and stabilizer system comprises:
a) 100 parts by weight of the organic peroxide;
b) 20 - 40 parts by weight of the diazabicycloamine;
c) 30 - 50 parts by weight of the isocyanurate;
d) 50 - 80 parts by weight of the layered organically modified inorganic nanofiller; and
e) 0 - 30 parts by weight of the antioxidant.

4. A composition according to claim 1, wherein the adhesion promoting curative and stabilizer system further comprises a polymer binder.

5. A composition according to claim 1, wherein the diazabicycloamine is selected from the group consisting of diazobicyclo(5.4.0)undec-7-ene phenol (DBU) and its salts.

6. A composition according to claim 1, wherein the layered organically modified inorganic nanofiller is an organoclay.

7. A composition according to claim 1, which contains no antioxidant.

8. An article comprising a vulcanizable elastomer composition according to claim 1.

9. An article according to claim 8, wherein the vulcanizable elastomer composition is cured.

10. An article according to claim 8, wherein the vulcanizable elastomer composition is uncured.

11. An article according to claim 8, which comprises a first part made from the vulcanizable elastomer composition adhered by vulcanization to a second part made of another polymer.

12. An article according to claim 11, wherein the second part comprises a fluoropolymer.

13. An article according to claim 12, wherein the fluoropolymer is a fluoroelastomer.

14. An article according to claim 13, wherein the fluoropolymer is a thermoplastic fluoropolymer.

15. An article according to claim 11, wherein the second part comprises a polyamide.

16. A method of improving adhesion of an elastomer composition to another polymer, the method comprising using a composition according to claim 1 as the elastomer composition.

17. A method according to claim 16, wherein the adhesion promoting curative and stabilizer system comprises:
a) 100 parts by weight of the organic peroxide;
b) 15 - 90 parts by weight of the diazabicycloamine;
c) 15 - 170 parts by weight of the isocyanurate;
d) 25 - 300 parts by weight of the layered organically modified inorganic nanofiller; and
e) 0 - 120 parts by weight of the antioxidant.

18. A method according to claim 16, wherein the adhesion promoting curative and stabilizer system comprises:
a) 100 parts by weight of the organic peroxide;
b) 20 - 40 parts by weight of the diazabicycloamine;
c) 30 - 50 parts by weight of the isocyanurate;
d) 50 - 80 parts by weight of the layered organically modified inorganic nanofiller; and
e) 0 - 30 parts by weight of the antioxidant.

19. A method according to claim 16, wherein the total antioxidant content in the elastomer composition is in the range from zero up to and including 3% by weight, based on the weight of the elastomer composition.

20. A method according to claim 16, wherein the total antioxidant content in the elastomer composition is zero.

## Patentansprüche

1. Vulkanisierbare Elastomerzusammensetzung mit verbesserter Adhäsion an anderen Polymeren, die wenigstens ein Elastomer und ein adhäsionsförderndes Aushärt- und Stabilisierungssystem umfasst, wobei
1. das wenigstens eine Elastomer ein Epichlorhydrincopolymer ist,
2. das adhäsionsfördernde Aushärt- und Stabilisierungssystem umfasst
a) ein organisches Peroxid,
b) ein Diazabicycloamin,
c) ein Isocyanurat,
d) einen geschichteten organisch modifizierten anorganischen Nanofüllstoff und
e) wahlweise ein Antioxidationsmittel und
3. der Gesamtantioxidationsmittelgehalt in der Elastomerzusammensetzung im Bereich von Null bis zu und einschließlich 5 Gewichtsanteilen pro 100 Gewichtsanteilen Elastomer beträgt.

2. Zusammensetzung nach Anspruch 1, wobei das adhäsionsfördernde Aushärt- und Stabilisierungssystem umfasst:
a) 100 Gewichtsanteile des organischen Peroxids,
b) 50 - 90 Gewichtsanteile des Diazabicycloamins,
c) 15 - 170 Gewichtsanteile des Isocyanurats,
d) 25 - 300 Gewichtsanteile des geschichteten organisch modifizierten anorganischen Nanofüllstoffs und
e) 0 - 120 Gewichtsanteile des Antioxidationsmittels.

3. Zusammensetzung nach Anspruch 1, wobei das adhäsionsfördernde Aushärt- und Stabilisierungssystem umfasst:
a) 100 Gewichtsanteile des organischen Peroxids,
b) 20 - 40 Gewichtsanteile des Diazabicycloamins,
c) 30 - 50 Gewichtsanteile des Isocyanurats,
d) 50 - 80 Gewichtsanteile des geschichteten organisch modifizierten anorganischen Nanofüllstoffs und
e) 0 - 30 Gewichtsanteile des Antioxidationsmittels.

4. Zusammensetzung nach Anspruch 1, wobei das adhäsionsfördernde Aushärt- und Stabilisierungssystem ferner ein Polymerbindemittel umfasst.

5. Zusammensetzung nach Anspruch 1, wobei das Diazabicycloamin aus der aus Diazobicyclo-(5,4,0)-undec-7-enphenol (DBU) und seinen Salzen bestehenden Gruppe ausgewählt ist.

6. Zusammensetzung nach Anspruch 1, wobei der geschichtete organisch modifizierte anorganische Nanofüllstoff ein Organoschlamm ist.

7. Zusammensetzung nach Anspruch 1, die kein Antioxidationsmittel enthält.

8. Gegenstand, der eine vulkanisierbare Elastomerzusammensetzung nach Anspruch 1 umfasst.

9. Gegenstand nach Anspruch 8, wobei die vulkanisierbare Elastomerzusammensetzung ausgehärtet ist.

10. Gegenstand nach Anspruch 8, wobei die vulkanisierbare Elastomerzusammensetzung nicht ausgehärtet ist.

11. Gegenstand nach Anspruch 8, der ein erstes Teil umfasst, das aus der vulkanisierbaren Elastomerzusammensetzung hergestellt ist, die mittels Vulkanisation an ein zweites Teil angeheftet ist, das aus einem anderen Polymer hergestellt ist.

12. Gegenstand nach Anspruch 11, wobei das zweite Teil ein Fluorpolymer umfasst.

13. Gegenstand nach Anspruch 12, wobei das Fluorpolymer ein Fluorelastomer ist.

14. Gegenstand nach Anspruch 13, wobei das Fluorpolymer ein thermoplastisches Fluorpolymer ist.

15. Gegenstand nach Anspruch 11, wobei das zweite Teil ein Polyamid umfasst.

16. Verfahren zum Verbessern der Adhäsion einer Elastomerzusammensetzung an ein anderes Polymer, wobei das Verfahren Verwenden einer Zusammensetzung nach Anspruch 1 als die Elastomerzusammensetzung umfasst.

17. Verfahren nach Anspruch 16, wobei das adhäsionsfördernde Aushärt- und Stabilisierungssystem umfasst:
a) 100 Gewichtsanteile des organischen Peroxids,
b) 15 - 90 Gewichtsanteile des Diazabicycloamins,
c) 15 - 170 Gewichtsanteile des Isocyanurats,
d) 25 - 300 Gewichtsanteile des geschichteten organisch modifizierten anorganischen Nanofüllstoffs und
e) 0 - 120 Gewichtsanteile des Antioxidationsmittels.

18. Verfahren nach Anspruch 16, wobei das adhäsionsfördernde Aushärt- und Stabilisierungssystem umfasst:
a) 100 Gewichtsanteile des organischen Peroxids,
b) 20 - 40 Gewichtsanteile des Diazabicycloamins,
c) 30 - 50 Gewichtsanteile des Isocyanurats,
d) 50 - 80 Gewichtsanteile des geschichteten organisch modifizierten anorganischen Nanofüllstoffs und
e) 0 - 30 Gewichtsanteile des Antioxidationsmittels.

19. Verfahren nach Anspruch 16, wobei der gesamte Antioxidationsmittelgehalt in der Elastomerzusammensetzung im Bereich von Null bis zu und einschließlich 3 Gewichts-% basierend auf dem Gewicht der Elastomerzusammensetzung beträgt.

20. Verfahren nach Anspruch 16, wobei der Gesamtantioxidationsmittelgehalt in der Elastomerzusammensetzung Null beträgt.

## Revendications

1. Composition d'élastomère vulcanisable présentant une adhérence améliorée à d'autres polymères et comprenant au moins un élastomère et un système durcissant et stabilisant promouvant l'adhérence, dans laquelle
1. le au moins un élastomère est un copolymère d'épichlorhydrine,
2. le système durcissant et stabilisant promouvant l'adhérence comprend :
a) un peroxyde organique ;
b) une diazabicycloamine ;
c) un isocyanurate ;
d) une nanocharge inorganique organiquement modifiée à couches ; et
e) éventuellement un antioxydant, et
3. la teneur totale en antioxydant dans la composition d'élastomère se trouve dans l'intervalle de zéro jusqu'à et incluant 5 parties en masse, pour 100 parties en masse d'élastomère.

2. Composition selon la revendication 1, dans laquelle le système durcissant et stabilisant promouvant l'adhérence comprend :
a) 100 parties en masse du peroxyde organique ;
b) 15 - 90 parties en masse de la diazabicycloamine ;
c) 15 - 170 parties en masse de l'isocyanurate ;
d) 25 - 300 parties en masse de la nanocharge inorganique organiquement modifiée à couches ; et
e) 0 - 120 parties en masse de l'antioxydant.

3. Composition selon la revendication 1, dans laquelle le système durcissant et stabilisant promouvant l'adhérence comprend :
a) 100 parties en masse du peroxyde organique ;
b) 20 - 40 parties en masse de la diazabicycloamine ;
c) 30 - 50 parties en masse de l'isocyanurate ;
d) 50 - 80 parties en masse de la nanocharge inorganique organiquement modifiée à couches ; et
e) 0 - 30 parties en masse de l'antioxydant.

4. Composition selon la revendication 1, dans laquelle le système durcissant et stabilisant promouvant l'adhérence comprend de plus un liant polymère.

5. Composition selon la revendication 1, dans laquelle la diazabicycloamine est choisie dans le groupe constitué de diazobicyclo(5.4.0)undéc-7-ène phénol (DBU) et ses sels.

6. Composition selon la revendication 1, dans laquelle la nanocharge inorganique organiquement modifiée à couches est un organoargile.

7. Composition selon la revendication 1, laquelle ne contient pas d'antioxydant.

8. Article comprenant une composition d'élastomère vulcanisable selon la revendication 1.

9. Article selon la revendication 8, dans lequel la composition d'élastomère vulcanisable est durcie.

10. Article selon la revendication 8, dans lequel la composition d'élastomère vulcanisable est non durcie.

11. Article selon la revendication 8, lequel comprend une première partie constituée de la composition d'élastomère vulcanisable adhérant par vulcanisation à une seconde partie constituée d'un autre polymère.

12. Article selon la revendication 11, dans lequel la seconde partie comprend un fluoropolymère.

13. Article selon la revendication 12, dans lequel le fluoropolymère est un fluoroélastomère.

14. Article selon la revendication 13, dans lequel le fluoropolymère est un fluoropolymère thermoplastique.

15. Article selon la revendication 11, dans lequel la seconde partie comprend un polyamide.

16. Procédé d'amélioration d'adhérence d'une composition d'élastomère à un autre polymère, le procédé comprenant l'utilisation d'une composition selon la revendication 1 comme la composition d'élastomère.

17. Procédé selon la revendication 16, dans lequel le système durcissant et stabilisant promouvant l'adhérence comprend :
a) 100 parties en masse du peroxyde organique ;
b) 15 - 90 parties en masse de la diazabicycloamine ;
c) 15 - 170 parties en masse de l'isocyanurate ;
d) 25 - 300 parties en masse de la nanocharge inorganique organiquement modifiée à couches ; et
e) 0 - 120 parties en masse de l'antioxydant.

18. Procédé selon la revendication 16, dans lequel le système durcissant et stabilisant promouvant l'adhérence comprend :
a) 100 parties en masse du peroxyde organique ;
b) 20 - 40 parties en masse de la diazabicycloamine ;
c) 30 - 50 parties en masse de l'isocyanurate ;
d) 50 - 80 parties en masse de la nanocharge inorganique organiquement modifiée à couches ; et
e) 0 - 30 parties en masse de l'antioxydant.

19. Procédé selon la revendication 16, dans lequel la teneur totale en antioxydant dans la composition d'élastomère se trouve dans l'intervalle allant de zéro jusqu'à et incluant 3 % en masse, rapporté à la masse de la composition d'élastomère.

20. Procédé selon la revendication 16, dans lequel la teneur totale en antioxydant dans la composition d'élastomère est zéro.
